# EUROPEAN PATENT APPLICATION

(11) **EP 3 636 979 A1**
(43) Date of publication of application: **15.04.2020**
(21) Application number: 19000433.3
(22) Date of filing: 27.09.2019
(51) Int. Cl.: F16M 11/04, F16M 13/02

(54) **STAND HOLDER FOR A MOBILE DEVICE**

(30) Priority: 12.10.2018 US 201816159490
(71) Applicant: Investment Group "Kopernik", LLC, Moscow 127051 (RU)
(72) Inventor: Senatorov, Aleksandr Gennadievich, Moscow 119017 (RU)
(74) Representative: Álvarez López, Sonia

(57) **Abstract**

A mobile device holder and mount that allows a user to attach the mobile device to an external structure or an external surface easily and efficiently. The holder includes a first plate, a second plate, a plurality of support bars, a plurality of first magnets, a ferromagnetic plate, and a flexible wire. The first plate and the second plate are mounted parallel and offset to each other. The support bars are normally distributed in between the first plate and the second plate. The first magnets are distributed across the first plate and are adjacently mounted to the first plate. The ferromagnetic plate attached to a mobile device and magnetically mounts to the first plate. The flexible wire is threaded in between the support bars and attached to an external structure or an external surface.

## Description

### FIELD OF THE INVENTION

The present invention generally relates to mobile device accessories. More specifically, the present invention is a supporting structure for radiotelephones, mobile phones, and other mobile devices. The present invention attaches a mobile device to an external structure. Additionally, the present invention mounts a mobile device onto a surface in a vertical or a semi-vertical orientation, ideal for use in offices and residential premises.

### BACKGROUND OF THE INVENTION

The present invention is a stand-holder for portable mobile devices with extension of its usage possibilities. The present invention provides a means for affixing a portable mobile device to an external structure and supporting the portable mobile device on a surface. Additionally, the present invention allows for a swift disconnection or connection in between the present invention and a portable mobile device. This is especially useful as the present invention does not require any tools for connection and does not use any moving parts for the connecting, resulting in a higher product life than similar stand-holders for portable mobile devices.

The present invention attaches to a portable mobile device through a magnetic coupling, resulting in a convenient stand-holder. Additionally, the present invention includes a flexible mounting wire that may be deformed into a variety of configurations and allow for mounting and attachment means to a variety of external structures including, but not limited to, poles, air vents, and most flat surfaces. Furthermore, the flexible mounting wire may be shaped into a hook and latched onto a variety of ledges and other similar structures.

### BRIEF DESCRIPTION OF THE DRAWINGS

FIG. **1** is a perspective view of the present invention.
FIG. **2** is a perspective view of the present invention in an exploded state.
FIG. **3** is a side view of the present invention.
FIG. **4** is a perspective view of the present invention attached to a mobile device.
FIG. **5** is a rear perspective view of the present invention attached to a mobile device.
FIG. 6 is a bottom internal view of the present invention.

### DETAIL DESCRIPTIONS OF THE INVENTION

All illustrations of the drawings are for the purpose of describing selected versions of the present invention and are not intended to limit the scope of the present invention.

The present invention is a mobile device accessory. More specifically, the present invention is a fixation device for mobile devices. The present invention is designed to mount, attach, and or support mobile devices such as a smartphone, a telephone, a tablet, and other portable devices.

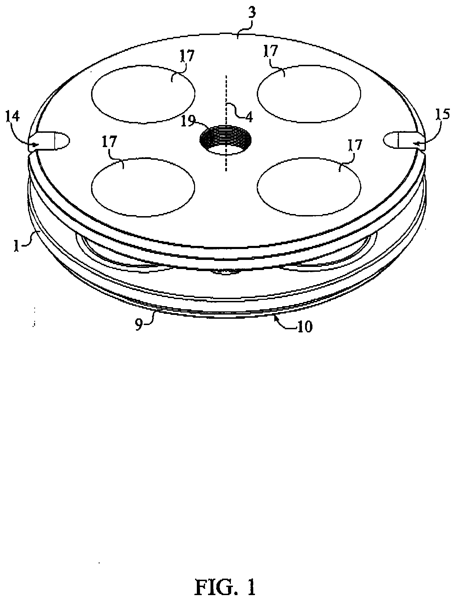

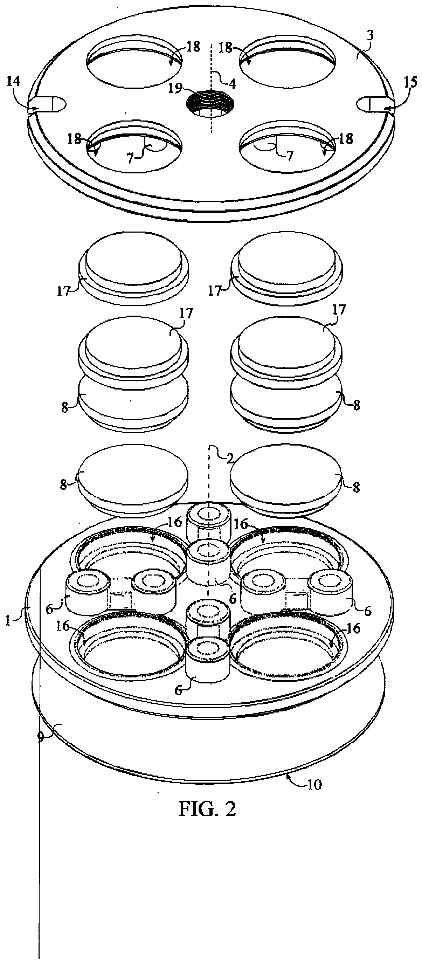

Referring to FIG. **1** and FIG. **2****,** in the simplest embodiment, the present invention comprises a first plate **1,** a second plate **3,** a plurality of support bars **5,** a plurality of first magnets **8,** and a ferromagnetic plate **9,** and a flexible wire **11.** The first plate **1** and the second plate **3** make up the main body of the present invention. In general, the first plate **1** and the second plate **3** couple the mobile device to the flexible wire **11.** The first plate **1** and the second plate **3** house the plurality of first magnets **8,** the plurality of support bars **5,** and a portion or the full flexible wire **11.** It is preferred that the first plate **1** and the second plate **3** are identically shaped and sized. Specifically, the preferred design is a disk. The first plate **1** and the second plate **3** are mounted parallel and offset to each other. The distance between the first plate **1** and the second plate **3** is at minimum the thickness of the flexible wire **11.** The plurality of support bars **5** connects the first plate **1** to the second plate **3.** Specifically, the plurality of support bars **5** is distributed across the first plate **1;** wherein each of the plurality of support bars **5** is mounted normal in between the first plate **1** and the second plate **3.** The plurality of support bars **5** provides the flexible wire **11** a means of attaching to the first plate **1** and the second plate **3.**

The flexible wire **11** is an elastic and deformable elongated strand or rod which attaches or mounts the present invention to an external structure. The thickness, composition, and length of the flexible wire **11** is subject to change to meet the support and attachment needs of a mobile device. The flexible wire **11** is positioned in between the first plate **1** and the second plate **3** and is threaded through an at least two support bars from the plurality of support bars **5.** Thus, allowing the flexible wire **11** to couple to the first plate **1** and the second plate **3** in a variety of configuration. The means by which the present invention attaches to external structure is directed by the flexible wire **11.** While a first portion of the flexible wire **11** is affixed to the plurality of support bars **5,** a second portion of the flexible wire **11** may be wrapped around an external structure or configured to vertically stand on a surface. In the preferred embodiment of the present invention, the flexible wire **11** includes a plastic core that is sleeved by an elastic silicone braid.

The ferromagnetic plate **9** and the plurality of first magnets **8** attach the present invention to a mobile device. The ferromagnetic plate **9** is preferably a disk matching the size and design of the first plate **1** that is composed of metallic material that is ferromagnetic. The ferromagnetic plate **9** is attached or coupled to a mobile device and is coupled to the first plate **1** through the plurality of first magnets **8.** Each of the plurality of first magnets **8** is preferably a magnetic disk. The plurality of first magnets **8** is distributed about the first plate **1,** with each of the plurality of first magnets **8** being adjacently mounted to the first plate **1.** Specifically, the plurality of first magnets **8** is radially distributed about a central axis **2** of the first plate **1.** Additionally, the plurality of first magnets **8** is radially distributed in a successive alternating magnetic-polarity configuration. This ensures that there are as little as possible repulsion forces amongst the plurality of first magnets **8.** The number, size, composition, shape, and location of the plurality of first magnets **8** is subject to change. When the ferromagnetic plate **9** is positioned adjacent to the first plate **1,** opposite to the second plate **3,** the ferromagnetic plate **9** is magnetically attached to the first plate **1** by the plurality of first magnets **8.** For the most efficient coupling, the ferromagnetic plate **9** is oriented parallel to the first plate **1.** This allows a user to easily and quickly mount or affix his or her mobile device without complicated installation steps or interlocking mechanisms.

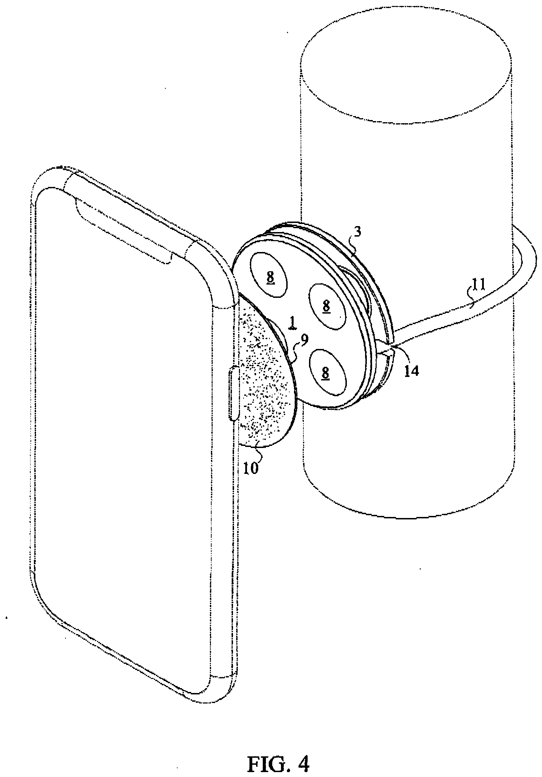

Referring to FIG. **4****,** the ferromagnetic plate **9** may be attached to a mobile device through a variety of means. In the preferred embodiment, the ferromagnetic plate **9** is attached by an adhesive layer **10.** The adhesive layer **10** is an adhesive composition or an adhesive tape. The adhesive layer **10** is positioned adjacent to the ferromagnetic plate **9,** opposite the first plate **1.** On one side, the adhesive layer **10** is adjacently connected to the ferromagnetic plate **9.** On the other side, the adhesive layer **10** is attached to a back or side of a mobile device. In alternative embodiments, the ferromagnetic plate **9** may be attached to a mobile device through screws, bolts, interlocking mechanism, and other similar means. In particular, in one embodiment, the ferromagnetic plate **9** may be affixed to a mobile device by being positioned within a case of a mobile device and held in place through the compression between the mobile device and the case.

The plurality of first magnets **8** may be mounted to the first plate **1** in a variety of means. It is preferred that the plurality of first magnets **8** is mounted to the first plate **1** through a plurality of first cavities **16.** Matching the configuration of the plurality of first magnets **8,** the plurality of first cavities **16** is radially distributed about the central axis **2** of the first plate **1.** Additionally, each of the plurality of first cavities **16** is shaped and sized to receive a corresponding magnet from the plurality of first magnets **8.** Furthermore, each of the plurality of first cavities **16** normally traverses through the first plate **1.** Referring to FIG. **2****,** each of the plurality of first magnets **8** is positioned within a corresponding cavity from the plurality of first cavities **16** and is mounted to the first plate **1.** In the preferred embodiment of the present invention, each of the plurality of first magnets **8** is mounted within the corresponding cavity through a staircase configuration. Additionally, to prevent the plurality of first magnets **8** from falling out of the plurality of first cavities **16,** each of the plurality of first cavities **16** includes a ledge. In alternative embodiments of the present invention, each of the plurality of first magnets **8** is pressed within the corresponding cavity from the plurality of second cavities **18.** Furthermore, in yet another embodiment, the plurality of first magnets **8** is permanently integrated into the first plate **1.**

Referring to FIG. **2****,** the present invention may further comprise a plurality of second magnets **17** and a plurality of second cavities **18.** The plurality of second magnets **17** is integrated into the second plate **3** through the plurality of second cavities **18.** This allows the second plate **3** to be magnetically coupled to an external surface for mounting or storage purposes. Additionally, this allows more than one instances of the present invention to be attached to each other for additional mounting configurations. In general, each of the plurality of second magnets **17** is identical to the plurality of first magnets **8.** The plurality of second magnets **17** is distributed across the second plate **3** with each of the plurality of second magnets **17** being adjacently mounted to the second plate **3.** Specifically, the plurality of second magnets **17** is radially distributed about a central axis **4** of the second plate **3.** Resultantly, the plurality of second magnets **17** mirrors the plurality of first magnets **8** with the exception of each individual polarity of the plurality of second magnets **17.** Each of the plurality of second magnets **17** is configured to have an opposing polarity to a corresponding adjacent magnet from the plurality of first magnets **8** to ensure that the first plate **1** is magnetically attached to the second plate **3.**

Similar to the plurality of first magnets **8,** the plurality of second magnets **17** is mounted to the second plate **3** through the plurality of second cavities **18.** Matching the configuration of the plurality of second magnets **17,** the plurality of second cavities **18** is radially distributed about the central axis **4** of the second plate **3.** Additionally, each of the plurality of second cavities **18** is shaped and sized to receive a corresponding magnet from the plurality of second magnets **17.** Furthermore, each of the plurality of second cavities **18** normally traverses through the second plate **3.** Referring to FIG. **2****,** each of the plurality of second magnets **17** is positioned within a corresponding cavity from the plurality of second cavities **18** and is mounted to the second plate **3.** In the preferred embodiment of the present invention, each of the plurality of second magnets **17** is mounted within the corresponding cavity through a staircase configuration. Additionally, to prevent the plurality of second magnets **17** from dislodging out of the plurality of first cavities **16,** each of the plurality of second cavities **18** includes a ledge that perimetrically surrounds the corresponding opening. In alternative embodiments of the present invention, each of the plurality of second magnets **17** is pressed within the corresponding cavity from the plurality of second cavities **18.** Furthermore, in yet another embodiment, the plurality of second magnets **17** is permanently integrated into the second plate **3.**

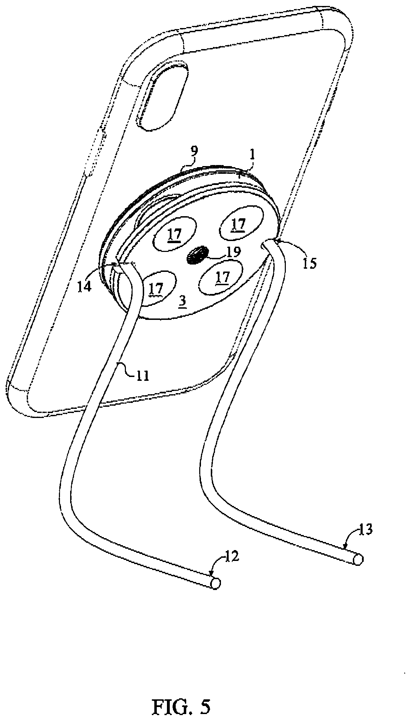

Referring to FIG. **5****,** the present invention further comprises a threaded hole **19,** a first notch **14,** and a second notch **15** that allow for additional mounting and attachment configurations. The threaded hole **19** allows the second plate **3** to be physically attached to an external threaded shank, thus allowing the present invention to attach to additional external structures as well as allow additional accessories to be attached to the present invention. The threaded hole **19** is concentrically positioned with the central axis **4** of the second plate **3.** Additionally, the threaded hole **19** normally traverses through the second plate **3.** The diameter, positioning, and thread type of the threaded hole **19** is subject to change. The first notch **14** and the second notch **15** are each an indentation in the second plate **3** allow the flexible wire **11** to be positioned into additional configurations. As such, the first notch **14** and the second notch **15** are each sized to receive the flexible wire **11.** The first notch **14** and the second notch **15** are positioned opposite to each other across the second plate **3.** The first notch **14** laterally traverses into the second plate **3.** Similarly, the second notch **15** laterally traverses into the second plate **3.** The flexible wire **11** may be threaded through the first notch **14** and the second notch **15** to allow for additional mounting configurations. For this, a portion of the flexible wire **11** is threaded in between the first plate **1** and the second plate **3** while a first end **12** of the flexible wire **11** is threaded through the first notch **14** and a second end **13** of the flexible wire **11** is threaded through the second notch **15.** This allows the flexible wire **11** to be positioned directly behind the second plate **3** without extending outside the profile of the second plate **3.**

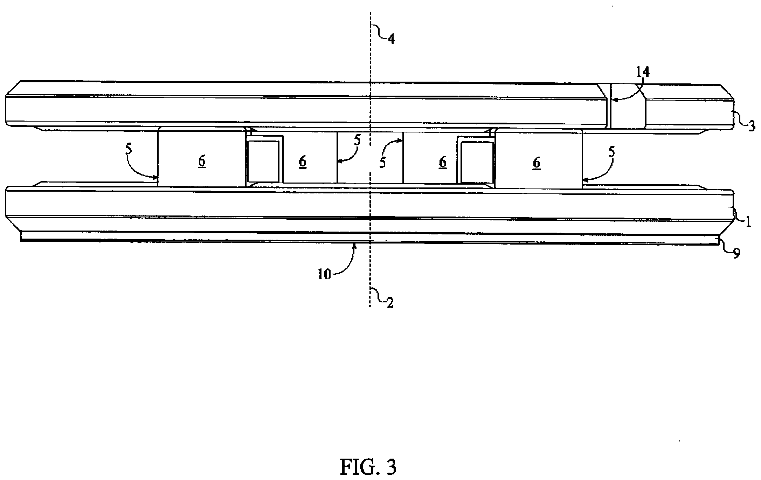

Referring to FIG. **3****,** in the preferred embodiment, each of the plurality of support bars **5** comprises an interlocking tube **6** and an interlocking pin **7.** This allows the first plate **1** to attach to the second plate **3** without the use of glue or other permanent fastening means. The interlocking tube **6** acts as a first interlocking element and is connected to the first plate **1.** Specifically, the interlocking tube **6** is positioned normal and adjacent to the first plate **1.** The interlocking pin **7** acts as a second interlocking element and is connected to the second plate **3.** Specifically, the interlocking tube **6** is positioned normal and adjacent to the second plate **3.** To interconnect the first plate **1** and the second plate **3,** the interlocking tube **6** and the interlocking pin **7** are first concentrically aligned with each other. Then, the interlocking pin **7** is mounted within the interlocking tube **6.** For this, the interlocking pin **7** and the interlocking pin **7** are complimentary sized to act as a fastening mechanism to connect the first plate **1** to the second plate **3.** In order to increase the fastening strength, a groove is implemented in the interlocking pin **7.** This ensures that resistance to shifting force on the interlocking pin **7** and the interlocking tube **6** are focused mostly on the interlocking tube **6.**

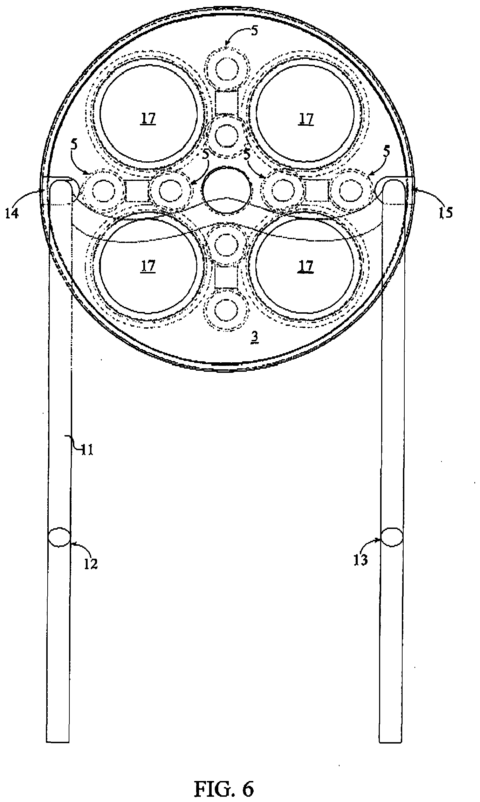

Referring to FIG. **6****,** the plurality of support bars **5** is preferably radially distributed about the central axis **2** of the first plate **1** for equal and symmetric support. It is preferred that the plurality of support bars **5** is positioned adjacent to the central axis **2** of the first plate **1,** thus leaving a certain amount of space about the perimeter open. This allows the flexible wire **11** to be fully stored in between the first plate **1** and the second plate **3.** For this, the flexible wire **11** is simply positioned in between the first plate **1** and the second plate **3,** and then wrapped around the plurality of support bars **5** until the whole body of the flexible wire **11** is located in between the first plate **1** and the second plate **3.** In one embodiment of the present invention, each of the plurality of support bars **5** is a magnetic bar. In yet another embodiment of the present invention, each of the plurality of support bars **5** includes an internal magnetic bar for additional magnetic coupling. Furthermore, in an alternative embodiment, the outer surface of the first plate **1** and the outer surface of the second plate **3** are covered by a sticker or other similar disk.

Although the invention has been explained in relation to its preferred embodiment, it is to be understood that many other possible modifications and variations can be made without departing from the spirit and scope of the invention as hereinafter claimed.

## Claims

1. A stand holder for a mobile device comprising:
a first plate;
a second plate;
a plurality of support bars;
a plurality of first magnets;
a ferromagnetic plate;
the first plate and the second plate being mounted parallel and offset to each other;
the plurality of support bars being positioned in between the first plate and the second plate;
the plurality of support bars being distributed across the first plate;
each of the plurality of support bars being mounted normal in between the first plate and the second plate;
The plurality of first magnets being distributed across the first plate;
Each of the plurality of first magnets being adjacently mounted to the first plate;
The ferromagnetic plate being positioned adjacent to the first plate,
Opposite to the second plate;
the ferromagnetic plate being oriented parallel to the first plate; and
the ferromagnetic plate being magnetically attached to the first plate by the plurality of first magnets.

2. The stand holder for a mobile device as claimed in claim 1 comprising:
an adhesive layer;
the adhesive layer being positioned adjacent to the ferromagnetic plate, opposite to the first plate; and
the adhesive layer being adjacently connected to the ferromagnetic plate.

3. The stand holder for a mobile device as claimed in claim 1 comprising:
a flexible wire; the flexible wire being positioned in between the first plate and the second plate; and the flexible wire being threaded in between an at least two support bars from the plurality of support bars.

4. The stand holder for a mobile device as claimed in claim 3 comprising:
a first notch;
a second notch;
the first notch and the second notch being positioned opposite to each other across the second plate;
the first notch laterally traversing into the second plate;
the second notch laterally traversing into the second plate;
a first end of the flexible wire being threaded through the first notch; and a second end of the flexible wire being threaded through the second notch.

5. The stand holder for a mobile device as claimed in claim 1 comprising:
a plurality of first cavities;
the plurality of first cavities being radially distributed about a central axis of the first plate;
each of the plurality of first cavities normally traversing through the first plate;
the plurality of first magnets being radially distributed about the central axis of the first plate;
each of the plurality of first magnets being positioned within a corresponding cavity from the plurality of first cavities; and each of the plurality of first magnets being mounted to the first plate.

6. The stand holder for a mobile device as claimed in claim 1 comprising:
a plurality of second cavities;
the plurality of second cavities being radially distributed about a central axis of the second plate;
each of the plurality of second cavities normally traversing through the second plate;
the plurality of second magnets being radially distributed about the central axis of the second plate;
each of the plurality of second magnets being positioned within a corresponding cavity from the plurality of second cavities;
and each of the plurality of second magnets being mounted to the second plate.

7. The stand holder for a mobile device as claimed in claim 1 comprising:
each of the plurality of support bars comprising an interlocking tube and an interlocking pin;
the interlocking tube being positioned normal and adjacent to the first plate;
the interlocking pin being positioned normal and adjacent to the second plate;
the interlocking tube and the interlocking pin being concentrically aligned with each other; and the interlocking pin being mounted within the interlocking tube.

8. The stand holder for a mobile device as claimed in claim 1, wherein each of the plurality of support bars is a magnet bar.

9. A stand holder for a mobile device comprising:
a first plate;
a second plate;
a plurality of support bars;
a plurality of first magnets;
a ferromagnetic plate;
a flexible wire;
an adhesive layer;
the first plate and the second plate being mounted parallel and offset to each other;
the plurality of support bars being positioned in between the first plate and the second plate;
the plurality of support bars being distributed across the first plate;
each of the plurality of support bars being mounted normal in between the first plate and the second plate;
the plurality of first magnets being distributed across the first plate;
each of the plurality of first magnets being adjacently mounted to the first plate;
the ferromagnetic plate being positioned adjacent to the first plate,
opposite to the second plate;
the ferromagnetic plate being oriented parallel to the first plate;
the ferromagnetic plate being magnetically attached to the first plate by the plurality of first magnets;
the flexible wire being positioned in between the first plate and the second plate;
the flexible wire being threaded in between an at least two support bars from the plurality of support bars;
the adhesive layer being positioned adjacent to the ferromagnetic plate, opposite to the first plate; and
the adhesive layer being adjacently connected to the ferromagnetic plate.

10. The stand holder for a mobile device as claimed in claim 9 comprising:
a first notch;
a second notch;
the first notch and the second notch being positioned opposite to each other across the second plate;
the first notch laterally traversing into the second plate;
the second notch laterally traversing into the second plate;
a first end of the flexible wire being threaded through the first notch; and a second end of the flexible wire being threaded through the second notch.

11. The stand holder for a mobile device as claimed in claim 9 comprising:
a plurality of first cavities;
the plurality of first cavities being radially distributed about a central axis of the first plate;
each of the plurality of first cavities normally traversing through the first plate;
The plurality of first magnets being radially distributed about the central axis of the first plate;
each of the plurality of first magnets being positioned within a corresponding cavity from the plurality of first cavities; and each of the plurality of first magnets being mounted to the first plate.

12. The stand holder for a mobile device as claimed in claim 9 comprising:
a plurality of second magnets;
the plurality of second magnets being distributed across the second plate;
and each of the plurality of second magnets being adjacently mounted to the second plate.

13. The stand holder for a mobile device as claimed in claim 12 comprising:
a plurality of second cavities;
the plurality of second cavities being radially distributed about a central axis of the second plate;
each of the plurality of second cavities normally traversing through the second plate;
the plurality of second magnets being radially distributed about the central axis of the second plate;
each of the plurality of second magnets being positioned within a corresponding cavity from the plurality of second cavities; and each of the plurality of second magnets being mounted to the second plate.

14. The stand holder for a mobile device as claimed in claim 9 comprising:
each of the plurality of support bars comprising an interlocking tube and an interlocking pin;
the interlocking tube being positioned normal and adjacent to the first plate;
the interlocking pin being positioned normal and adjacent to the second plate;
the interlocking tube and the interlocking pin being concentrically aligned with each other; and the interlocking pin being mounted within the interlocking tube.

15. The stand holder for a mobile device as claimed in claim 9, wherein each of the plurality of support bars is a magnet bar.
